# FASCICULE DE BREVET EUROPEEN

(11) **EP 0 415 306 B1**
(45) Date de publication et mention de la délivrance du brevet: **07.12.1994**
(21) Numéro de dépôt: 90116351.9
(22) Date de dépôt: 27.08.1990
(51) Int. Cl.: B01D 53/36

(54) **Dispositif pour la réduction de composés d'oxyde d'azote d'un gaz de combustion**
Vorrichtung zur Reduktion von Stickoxyden aus Verbrennungsgasen
Apparatus for the reduction of nitrogen oxides from combustion gases

(30) Priorité: 01.09.1989 FR 8911519
(43) Date de publication de la demande: 06.03.1991
(73) Titulaire: NONOX KAT AG, CH-8912 Obfelden (CH)
(72) Inventeur: Dubuis, Robert, CH-2563 Ipsach (CH); Rüegsegger, Ueli, CH-8912 Obfelden (CH)
(74) Mandataire: Caron, Gérard

(56) Documents cités:
- EP-A- 0 163 001
- EP-A- 0 170 567
- EP-A- 0 191 441
- EP-A- 0 226 203
- EP-A- 0 234 817

## Description

L'invention concerne le traitement catalytique des gaz de combustion, et notamment un dispositif permettant la réduction des composés d'oxyde d'azote (NOₓ) à l'aide d'un agent réducteur tel que l'ammoniac, associé à un catalyseur et destiné à être utilisé plus particulièrement dans des installations de moyenne importance telles que des installations de chauffage domestique ou analogue.

La pollution atmosphérique par les composés d'oxyde d'azote contenus dans les gaz de combustion des installations industrielles ou domestiques s'est révélée être ces dernières années une des causes probables des pluies acides dans les régions fortement industrialisées.

Les dommages causés aux forêts dans ces régions, par cette pollution, ont conduit les autorités compétentes ainsi que les industriels des pays concernés à prendre en compte ce phénomème et donc à développer des dispositifs visant à réduire, sinon à éliminer des gaz de combustion ces composés, nocifs pour notre environnement.

Parmi ces dispositifs, ceux utilisant la réduction catalytique des composés d'oxyde d'azote par un agent réducteur sont couramment employés dans les installations très importantes (d'une puissance de l'ordre de 3 à 1'000 MW) telles que les centrales thermiques/électriques ou analogues. Ces dispositifs comprennent des moyens d'injection d'un agent réducteur, par exemple de l'ammoniac, dans le courant de gaz de combustion, arrivant à des températures de l'ordre de 300°C en amont d'un catalyseur. Ce catalyseur, réalisé par exemple en oxyde de métaux rares, se présente sous la forme de conduits juxtaposés à section rectangulaire à travers lesquels circulent les gaz de combustion. Dans ce catalyseur, les composés d'oxyde d'azote associés à l'ammoniac et à l'oxygène sont transformés en azote et en eau selon les réactions suivantes :

- 4NO + 4NH₃ + O₂ → 4N₂ + 6H₂O (1)

- 6NO₂ + 8NH₃ + → 7N₂ + 12H₂O. (2)

Ces dispositifs très efficaces dans les unités industrielles présentent cependant de nombreux inconvénients lorsqu'ils sont utilisés dans des installations de moyenne importance (d'une puissance de l'ordre de 20 à 3'000 kW) et notamment dans des installations de chauffage domestique.

En effet, tandis que les importantes installations industrielles produisent en continu des gaz de combustion à des températures de l'ordre de 300°C et plus (température idéale de fonctionnement du catalyseur), la température des gaz de combustion provenant des installations de moyenne importance et notamment des installations domestiques varie entre 150°C et 300°C suivant la construction de l'installation produisant le gaz. Or, de telles variations du gaz dans le catalyseur empêchent les réactions (1) et (2) de se dérouler de manière satisfaisante et provoquent une condensation de sels d'ammonium qui se déposent sur la surface active du catalyseur notamment quand la température des gaz chute en dessous de 300°C. Ceci a pour conséquence une diminution considérable du rendement et une nécessité de nettoyage fréquent de ce catalyseur.

De plus, le fonctionnement intermittent de ce type d'installation ne permet pas au catalyseur (compte tenu de son inertie thermique) d'atteindre rapidement une température idéale dès la mise en marche de celle-ci. Par conséquent, à chaque mise en marche de l'installation, la partie des gaz de combustion passant à travers le catalyseur avant que ce dernier ait atteint sa température de fonctionnement n'est pas épurée, ce qui produit un encrassement du catalyseur, d'une part, et le dégagement de gaz non épurés dans l'atmosphère, d'autre part.

Par ailleurs, contrairement aux catalyseurs de très grandes dimensions (quelques dizaines de mètres carrés de surface) utilisés dans les installations industrielles qui sont régulièrement nettoyés automatiquement par soufflage d'air comprimé ou de vapeur dans les conduits, les catalyseurs utilisés dans les installations de moyenne importance nécessitent d'être démontés, ce qui n'est pas toujours possible, pour être nettoyés. Cela engendre un coût d'entretien supplémentaire qu'il convient de supprimer.

Pour remédier aux différents inconvénients liés à l'utilisation d'un catalyseur dans les installations de moyenne importance telles que les installations de chauffage domestique, on connaît une méthode consistant à réinjecter une partie des gaz de combustion vers la chambre de combustion afin de les éliminer par une seconde combustion.

Toutefois, cette méthode nécessite une maîtrise parfaite des paramètres de combustion dans la chambre et un entretien draconien de l'installation si bien que son utilisation est peu adaptée au type d'installation susmentionné. En outre, cette méthode ne permet de réduire qu'une quantité limitée et insuffisante des composés d'oxyde d'azote en regard des normes édictées par les réglementations en vigueur.

L'invention a donc pour but de remédier aux inconvénients de l'art antérieur analysé ci-dessus en fournissant un dispositif permettant une élimination satisfaisante des composés d'oxyde, d'azote dans des installations à fonctionnement intermittend, le dispositif assurant une amélioration du maintien en température du catalyseur.

A cet effet, l'invention a pour objet un dispositif pour la réduction de composés d'oxyde d'azote contenus dans des gaz de combustion provenant d'au moins une chambre de combustion, ce dispositif étant disposé sur un trajet d'écoulement principal des gaz de combustion entre la chambre de combustion et un trajet d'évacuation des gaz, ledit dispositif comprenant des moyens d'injection d'un agent réducteur dans le trajet d'écoulement principal et un catalyseur capable en combinaison avec le courant de gaz chargé de l'agent réducteur de réduire les composés d'oxyde d'azote.

Un premier mode de réalisation de l'invention selon lequel est créé un trajet d'écoulement secondaire des gaz est l'objet de la revendication 1.

Grâce aux caractéristiques revendiquées, les gaz de combustion provenant de la chambre de combustion peuvent être rapidement amenés à la température idéale de fonctionnement du catalyseur si bien que la réduction des composés d'oxyde d'azote se fait dans les meilleures conditions possibles et que tout risque de formation de sels nocifs pour le catalyseur est évité.

D'autre part, grâce à son trajet secondaire le dispositif permet de faire circuler dans le catalyseur de façon continue et en circuit fermé des gaz à une température désirée de sorte que la température du catalyseur est maintenue idéalement même lors de la mise en marche de l'installation après un arrêt prolongé de cette dernière.

Il est également à noter qu'un tel dispositif peut, de manière avantageuse, être mis en place dans une installation de chauffage domestique classique sans transformation importante du circuit et surtout permet de s'adapter indifféremment à tous types de chaudières ou de dispositifs produisant de façon intermittente des gaz de combustion chargés de composés d'oxyde d'azote à des températures inférieures ou égales à 300°C environ.

Un second mode de réalisation de l'invention, dans lequel les moyens de maintien en température sont constitués par un accumulateur de chaleur incorporant une résistance chauffante, est l'objet de la revendication 2.

D'autres caractéristiques et avantages de l'invention apparaîtront à la lecture de la description qui suit de modes de réalisation de l'invention donnés à titre illustratif et non limitatif en liaison avec les dessins annexés sur lesquels :
- la figure 1 représente de façon schématique un premier mode de réalisation du dispositif pour la réduction de composés d'oxyde d'azote selon l'invention;
- la figure 2 représente schématiquement un second mode de réalisation du dispositif pour la réduction des composés d'oxyde d'azote selon l'invention;
- la figure 3 représente une vue en coupe du dispositif selon la figure 2 le circuit de commande ayant été omis; et
- la figure 4 représente une vue en coupe selon la ligne IV-IV de la figure 3.

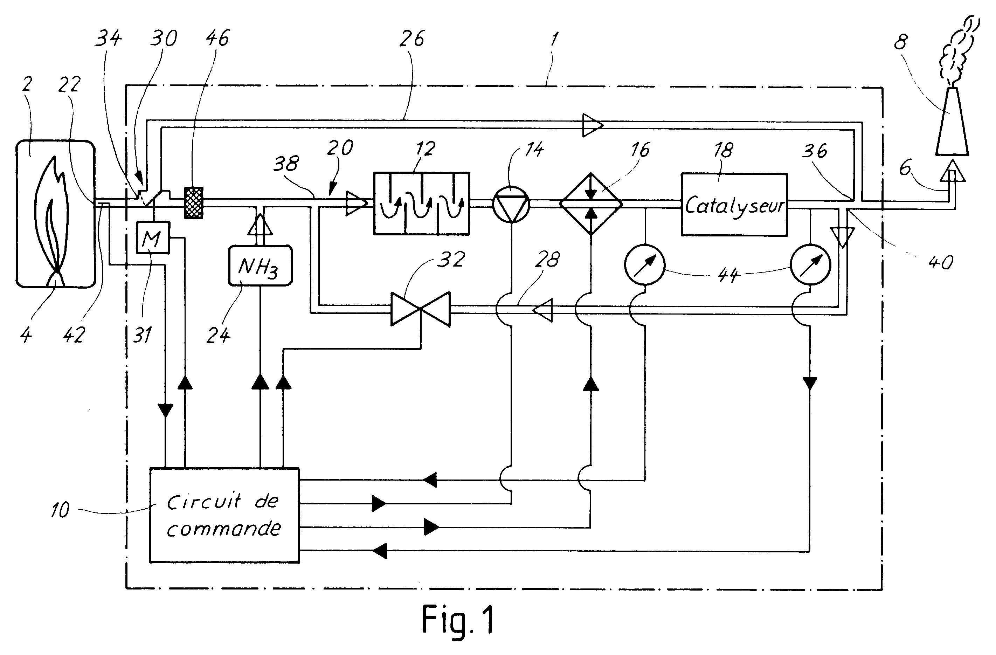

En se référant tout d'abord à la figure 1, on voit une représentation schématique d'un premier mode de réalisation du dispositif selon l'invention désigné par la référence numérique générale 1. Ce dispositif va être décrit ci-après dans le cadre d'une application à une installation de chauffage domestique, mais il va de soi qu'il peut s'appliquer à tout autre dispositif de moyenne importance produisant de façon intermittente des gaz combustion chargé de composés des oxydes d'azote que l'on désire éliminer et/ou dans lequel les gaz n'arrivent pas dans le catalyseur à la température souhaitée. Pour fixer les idées, l'invention peut être appliquée avec avantage dans les installations dont la puissance se situe entre 20 et 3'000 kW.

Bien entendu, dans la description qui va suivre, seuls les éléments de l'installation de chauffage nécessaires à la compréhension de l'invention seront décrits.

Comme il ressort de la figure 1, le dispositif 1 pour la réduction de composés d'oxyde d'azote est disposé sur un trajet d'évacuation des gaz entre une chambre de combustion 2 munie d'un brûleur 4 et un conduit d'évacuation 6 relié à une cheminée 8. Le brûleur 4 est un brûleur de type classique fonctionnant au gaz ou au fuel.

Il est bien entendu que l'invention est également applicable au traitement de gaz de combustion d'autres machines thermiques telles que des moteurs diesel et analogues.

On sait que le gaz et le fuel produisent, au cours de leur combustion, différents composés tels que notamment des composés d'oxyde d'azote, des composés d'oxyde de soufre et du mono-oxyde de carbone qu'il convient de réduire sinon d'éliminer. Parmi ces composés, l'invention concerne le processus de réduction des composés d'oxyde d'azote.

L'ensemble du dispositif géré par un circuit de commande 10 comprend un dispositif mélangeur 12, des moyens de soufflage 14, des moyens de chauffage 16 et un catalyseur 18 disposés en série sur un trajet principal 20 des gaz de combustion entre une sortie 22 de la chambre de combustion et le trajet d'évacuation 6.

En outre, le dispositif 1 comprend des moyens d'injection 24 d'un agent réducteur, branchés en amont du dispositif mélangeur 12 et deux trajets secondaires 26, 28 branchés en parallèle sur le trajet principal 20.

Les deux trajets secondaires sont équipés respectivement d'une vanne de dérivation 30 et d'une vanne 32 activables en réponse à un signal de commande provenant du circuit de commande 10.

Le trajet secondaire 26 ou en d'autres termes le trajet de dérivation, constitue un dispositif de sécurité pour l'évacuation des gaz de combustion en cas d'incident dans le dispositif. En réponse à un signal d'alarme provenant du circuit de commande 10, la vanne de dérivation 30 commandée par exemple par un moteur 31 peut être actionnée et met en circuit le trajet 26 reliant directement la chambre de combustion à la cheminée 8. Ce trajet 26 a une première extrémité 34 branchée entre la sortie 22 de la chambre de combustion et les moyens d'injection 24 et une seconde extrémité 36 branchée à la sortie du catalyseur 18.

Par ailleurs, le trajet secondaire 28 permet de réintroduire en aval des moyens d'injection 24 les gaz de combustion sortant du catalyseur 18. Ce trajet secondaire a une première extrémité 38 branchée en amont dispositif mélangeur 12 et une seconde extrémité 40 branchée à la sortie du catalyseur 18.

Le dispositif comprend également un détecteur de marche 42 du brûleur situé au niveau de la sortie de la chambre formant des moyens de détection de la présence de gaz de combustion à la chambre, et un détecteur de pression différentielle 44 comprenant deux capteurs disposés respectivement, à l'entrée et à la sortie du catalyseur 18. Ces détecteurs 42, 44 fournissent respectivement des informations sur l'état de fonctionnement du brûleur et sur l'écoulement des gaz de combustion à l'intérieur du circuit.

Enfin, le dispositif comprend un filtre à poussière 46 disposé en aval de la vanne 30. Ce filtre à poussière 46 arrête les particules solides contenues dans le courant de gaz et empêche ainsi une pollution de la surface active du catalyseur par ces particules.

On notera que ce filtre 46 est de préférence interchangeable.

Les différents modes de fonctionnement du dispositif selon l'invention vont maintenant être décrits.

Tout d'abord, en fonctionnement normal, c'est-à-dire lorsque le brûleur fonctionne en continu et produit normalement des gaz de combustion à une température par exemple de l'ordre de 250°C, le détecteur de marche 42 envoie un signal au circuit de commande 10. Ce dernier commande alors la fermeture de la vanne 32, la mise en marche des moyens d'injection 24, des moyens de soufflage 14 et des moyens de chauffage 16, la vanne 30 étant commandée pour mettre en communication la chambre de combustion et le trajet d'écoulement principal. Les gaz de combustion chargés notamment en composés d'oxyde d'azote provenant de la chambre de combustion sont alors dirigés le long du trajet principal 20 dans lequel l'agent réducteur, par exemple de l'ammoniaque, est injecté par les moyens d'injection 24.

Les moyens d'injection constitués, par exemple, par une pompe de dosage, injectent la quantité d'ammoniaque nécessaire à la réduction des composés d'oxyde d'azote (NOₓ) d'une part, et à la neutralisation des composés d'oxyde de soufre (SOₓ) d'autre part. L'ammoniaque injecté sous forme de solution aqueuse est immédiatement vaporisé et est mélangé dans le courant de gaz de combustion arrivant à une température d'environ 250°C.

On notera à ce propos que l'on injecte une quantité d'ammoniaque légèrement excédentaire pour assurer une réduction complète des composés d'oxyde d'azote et d'oxyde de soufre. Toutefois, l'ammoniaque sera dosé de sorte que la teneur en ammoniac des gaz épurés à la sortie de la cheminée n'excède pas 30 milligrammes par mètre cube de gaz selon les normes suisses LRVS 17.

Les gaz chargés d'ammoniac sont ensuite aspirés par les moyens de soufflage 14 afin d'être dirigés dans le dispositif mélangeur 12. Les moyens de soufflage comprennent par exemple, un ventilateur à vitesse variable. Dans ce mode de fonctionnement ces moyens permettent de rattraper les pertes de charge dans l'ensemble du dispositif afin de ne pas faire varier la vitesse de rotation du ventilateur (non représenté) de la chambre de combustion. Ainsi la combustion du mélange air/gaz ou air/fuel qui est d'un équilibre délicat n'est pas perturbée, si bien que le rendement de la chaudière peut être gardé constant.

Le dispositif mélangeur 14 disposé, dans le mode de réalisation illustré, en amont des moyens de soufflage 14 facilite l'homogénéisation du mélange gaz de combustion/ammoniac. Ce mélangeur est constitué par exemple, d'une série de chicanes à travers lesquelles le gaz est contraint de s'écouler.

Il est bien entendu que ce mélangeur 14 peut être disposé en tout autre endroit le long du trajet d'évacuation principal 20 entre les moyens d'injection 14 et le catalyseur 18.

Le courant de gaz mélangé est conduit à l'entrée des moyens de chauffage 16. Ces moyens de chauffage qui peuvent être par exemple, un dispositif de chauffage électrique direct, sont aptes à fournir une énergie suffisante aux gaz de combustion pour qu'ils atteignent à la sortie de ce dernier une température d'au moins 300°C.

En outre, comme cela est représenté sur la figure 1, les moyens de chauffage 16 sont disposés de préférence en aval des moyens de soufflage ; cependant, il est clair que la disposition inverse pourrait également être envisagée.

A titre d'exemple, un dispositif de chauffage comprenant des résistances électriques de chauffage venant directement en contact avec les gaz peut constituer un mode de réalisation avantageux de ces moyens de chauffage. Il va de soi que tout autre dispositif de chauffage tel qu'un dispositif de chauffage indirect utilisant un fluide caloporteur peut aussi être utilisé.

Les gaz de combustion sortant des moyens de chauffage à environ 300°C pénètrent alors dans les conduits du catalyseur à une température idéale de réaction de réduction catalytique si bien que les composés d'oxyde d'azote contenus dans les gaz sont réduits avec une très grande efficacité.

Le catalyseur 18 utilisé dans ce mode de réalisation se présente sous la forme d'une pluralité de conduits juxtaposés réalisés en oxyde de métaux rares. Ce catalyseur de type classique est notamment commercialisé par la société Nonox Kat AG sous la dénomination commerciale "DeNOx".

Selon une variante de réalisation, on peut utiliser plusieurs catalyseurs disposés les uns à la suite des autres selon la quantité de gaz à épurer. Dans ce cas, les catalyseurs seront légèrement espacés les uns des autres de sorte que les gaz de combustion à la sortie de chaque catalyseur puissent se mélanger à nouveau avant de traverser le catalyseur suivant.

On notera que l'utilisation d'une pluralité de catalyseurs en série permet en outre d'augmenter avantageusement le taux de réduction desdits composés d'oxyde d'azote.

Enfin, les gaz de combustion débarrassés de leurs composés d'oxyde d'azote en sortie du catalyseur sont dirigés vers le conduit d'évacuation 6, puis dans l'amostphère par l'intermédiaire de la cheminée 8.

On notera également que, de façon connue, les composés d'oxyde soufre (SOₓ) sont également éliminés dans le dispositif. Cette élimination est raélisée par une réaction de neutralisation avec l'amoniac pour former des sels, ces derniers étant condensés par la suite lorsque la température des gaz de combustion diminue.

Pour fixer les idées, une chaudière du type CTC turbo 1300-270 d'une puissance de 315 kW, consommant environ 30 kg de fuel léger par heure, produit environ 441 m³/h de gaz de combustion. Ces gaz de combustion sortent de la chambre de combustion à une température avoisinant les 280°C et contiennent environ 95 ppm de NOₓ. Ces gaz arrivent alors dans le dispositif de chauffage à environ 250°C et en sortent à une température de l'ordre de 320°C. Après le passage des gaz, chauffés par les moyens de chauffage 16, dans les conduits du catalyseur, les gaz de combustion présentent une concentration en NOₓ de l'ordre de quelques ppm.

Dans le cas où le détecteur de pression différentielle 44 détecte une valeur de pression différente d'une valeur de consigne en raison d'un écoulement incorrect des gaz de combustion dans le catalyseur dû par exemple à un encrassement du catalyseur, le détecteur 44 fournit un signal de fonctionnement anormal au circuit de commande 10. Ce dernier commande alors les moyens de soufflage 14 de sorte qu'ils fonctionnent à un régime maximum pendant un temps prédéterminé, par exemple 30 s, pour éliminer les éventuelles particules de poussière déposés dans les conduits du catalyseur et rétablir ainsi un écoulement normal des gaz de combustion à travers ces derniers.

Si la valeur de pression demeure anormale, le circuit 10 commande alors l'actionnement de la vanne 30 pour mettre en circuit le trajet secondaire 26. Ainsi, les gaz de combustion provenant de la chambre 2 sont directement dirigés vers le trajet secondaire 26 relié au conduit d'évacuation 6 si bien que tout risque de bouchage de l'évacuation peut être évité. On peut alors intervenir sur le dispositif afin de le remettre en état de marche avec épuration sans interrompre le fonctionnement de la chaudière.

Enfin, lorsque la marche du brûleur est interrompue en fonctionnement normal, par exemple par un mécanisme du type thermostat, le détecteur de marche 42 fournit un signal d'interruption au circuit de commande 10, qui provoque l'ouverture de la vanne 32 du trajet secondaire 28 et l'interruption de l'injection de l'ammoniaque. Les gaz contenus entre le branchement 38 et le branchement 40 circulent alors en circuit fermé. Ainsi, les gaz sortant du catalyseur sont immédiatement réintroduits en aval des moyens d'injection 24, si bien que le catalyseur peut être maintenu constamment à une température de fonctionnement convenable, ce dernier étant efficace dès la remise en marche du brûleur.

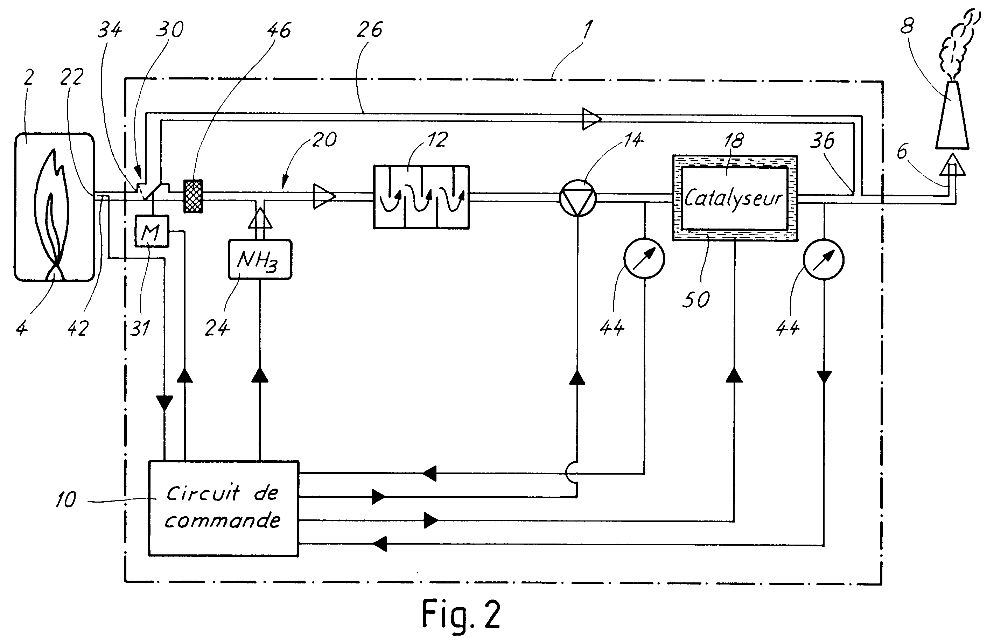

En se référant maintenant aux figures 2 à 4 on voit un second mode de réalisation d'un dispositif pour la réduction des composés d'oxyde d'azote contenus dans des gaz de combustion selon l'invention dans lequel on a désigné les éléments identiques à ceux décrits précédemment par les mêmes références numériques.

Comme il ressort clairement de ces figures les moyens de chauffage 16 et le trajet secondaire 28 ont été supprimés et cet ensemble a été remplacé par un dispositif de chauffage 50 du catalyseur 18.

Ce dispositif de chauffage 50 constitue de préférence un accumulateur de chaleur, et est commande par le circuit de commande 10 en réponse à un signal de commande représentatif du débit d'écoulement du fluide à la sortie de la chambre, c'est-à-dire de l'état de marche du brûleur 6.

Le dispositif 50 comprend une enveloppe étanche 52 contenant un fluide caloporteur 54 et dans laquelle est disposé le catalyseur 18, cette enveloppe 52 comportant par ailleurs une résistance chauffante 56 en contact direct avec le fluide caloporteur.

La résistance 56 peut être alimentée de façon variable de sorte qu'elle constitue des moyens de chauffage d'appoint.

Ainsi, le catalyseur peut être aisément chauffé à la température désirée par simple conduction thermique et peut, d'une part, être maintenu à sa température idéale de fonctionnement quand le brûleur ne fonctionne pas, et d'autre part, le cas échéant directement chauffer les gaz de combustion à épurer arrivant dans le catalyseur à la température idéale de catalyse .

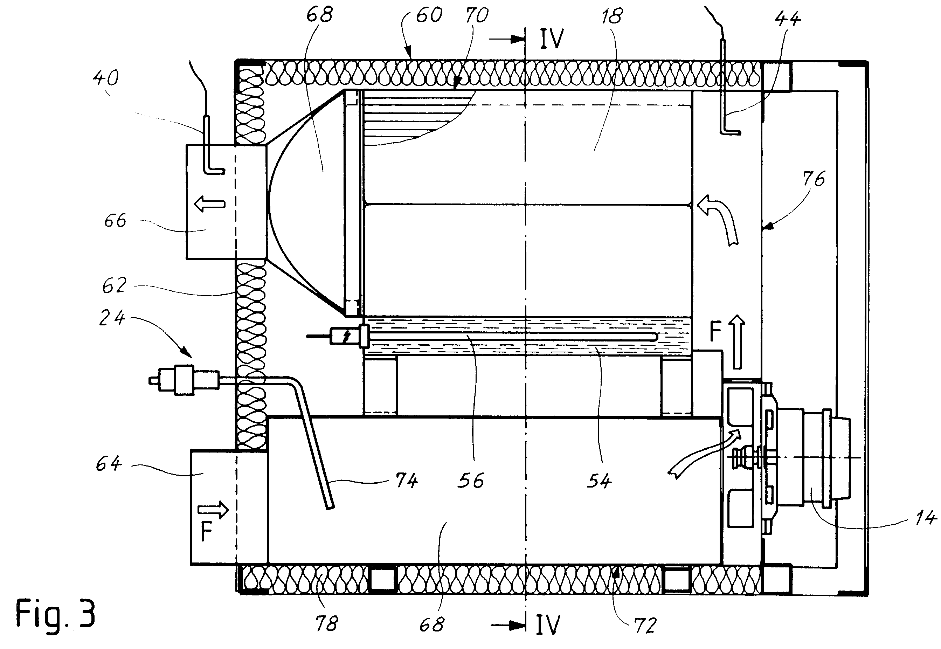

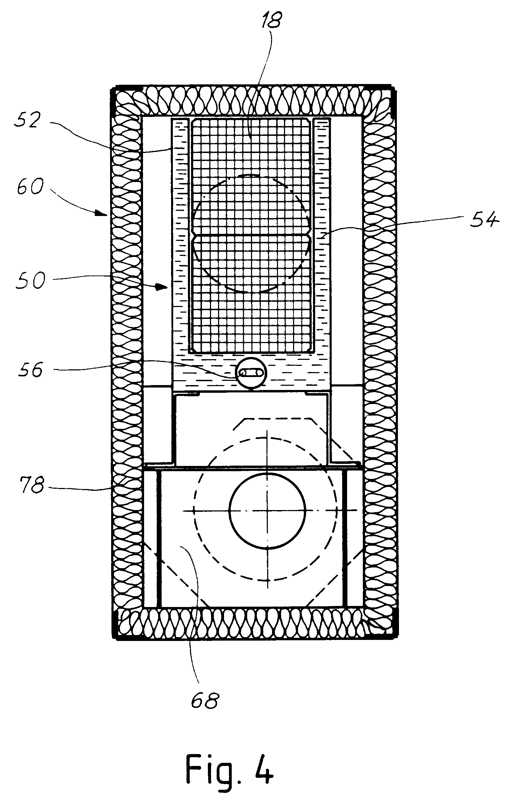

En se référant plus particulièrement aux figures 3 et 4, on voit comment la variante de réalisation du dispositif de l'invention représentée à la figure 2 peut être réalisée pratiquement, le filtre 46 et le trajet de dérivation 26 ayant été omis.

Le dispositif qui forme à lui seul une unité d'épuration destinée à être mis en place sur un trajet d'évacuation des gaz de combustion de type classique est disposé à l'intérieur d'un caisson 60.

A partir d'une paroi 62 de ce caisson débouchent deux ouvertures 64, 66 respectivement d'entrée et de sortie des gaz de combustion à épurés. Comme il ressort clairement des figures, le trajet d'écoulement des gaz symbolisé par la flèche F est délimité par un conduit 68 présentant la configuration générale d'un U.

Les deux branches 70, 72 du U abritent respectivement le catalyseur 18 (dans ce cas deux catalyseurs superposés) et les moyens d'injection 24 formés par la buse 74 faisant saillie à l'intérieur du conduit 68.

L'âme 76 du U relie les parties du circuit 70, 72 et comprend les moyens de soufflage 14 formés par un ventilateur.

On notera à ce propos que dans ce mode de réalisation le ventilateur constitue à la fois les moyens de soufflage 12 et le dispositif mélangeur 14.

Enfin, on voit que les parois intérieures du caisson 60 comprennent un revêtement thermiquement isolant 78 classique du type laine de verre ou analogue.

On notera que, de manière avantageuse, dans ce mode de réalisation, il n'est pas nécessaire d'utiliser les moyens de soufflage, dans le cas où la chambre de combustion ne produit plus de gaz et que l'association directe des moyens de chauffage au catalyseur entraîne une construction avantageusement compacte.

## Revendications

1. Dispositif pour la réduction de composés d'oxyde d'azote contenus dans des gaz de combustion provenant d'au moins une chambre de combustion ayant un fonctionnement intermittent, ce dispositif étant disposé sur un trajet d'écoulement principal (20) des gaz de combustion entre la chambre de combustion (2) et un trajet d'évacuation (6) des' gaz, ledit dispositif comprenant sur le trajet d'écoulement principal (20) des moyens d'injection (24) d'un agent réducteur et un catalyseur (18) capable, en combinaison avec le courant de gaz de combustion chargé de l'agent réducteur, de réduire les composés d'oxyde d'azote, caractérisé en ce que, sur le trajet d'écoulement principal (20), sont prévus des moyens de soufflage (14) des gaz et, en amont du catalyseur (18), des moyens de chauffage (16) des gaz, ces moyens de soufflage et de chauffage (14,16) étant associés à un trajet d'écoulement secondaire (28) comprenant une vanne variable (32), branché en parallèle du trajet d'écoulement principal (20) entre un premier point (38) situé en aval des moyens d'injection (24) mais en amont des moyens de soufflage (14) et de chauffage (16) et un deuxième point (40) situé en amont du trajet d'évacuation (6) des gaz, mais en aval, et du catalyseur (18), et des moyens de soufflage (14), et en ce que des moyens de commande (10) commandent les moyens d'injection (24), les moyens de soufflage (14) et de chauffage (16) et la vanne variable (32) de sorte que, en l'absence de débit de gaz provenant de la chambre de combustion (2), une circulation en circuit fermé des gaz entre les premier et deuxième points (38,40) entretienne un chauffage adéquat du catalyseur (18).

2. Dispositif pour la réduction de composés d'oxyde d'azote contenus dans des gaz de combustion d'au moins une chambre de combustion ayant un fonctionnement intermittent, ce dispositif étant disposé sur un trajet d'écoulement principal (20) des gaz de combustion entre la chambre de combustion (2) et un trajet d'évacuation (6) des gaz, ledit dispositif comprenant des moyens d'injection (24) d'un agent réducteur dans le trajet d'écoulement principal (20) et un catalyseur (18) capable, en combinaison avec le courant de gaz de combustion chargé de l'agent réducteur, de réduire les composés d'oxyde d'azote, caractérisé en ce que ledit dispositif comprend des moyens de soufflage (14) des gaz de combustion chargés de l'agent réducteur, des moyens de chauffage (16; 50) pour maintenir le catalyseur (18) à une température sensiblement constante correspondant à la température de catalyse adéquate en dépit du fonctionnement intermittent de ladite chambre de combustion, et en ce que les moyens de chauffage sont constitués par un accumulateur de chaleur (50) comprenant une enveloppe étanche (52) contenant un fluide caloporteur et entourant au moins une partie substantielle du catalyseur (18), cette enveloppe (52) comportant une résistance chauffante (56) en contact direct avec le fluide caloporteur, le catalyseur (18) étant maintenu en température soit par des gaz de combustion circulant à travers le catalyseur, soit par des moyens de chauffage d'appoint associés audit accumulateur de chaleur.

3. Dispositif selon la revendication 1, caractérisé en ce que les moyens de soufflage (14) sont disposés dans le trajet principal (20) entre les branchements (38, 40) du trajet secondaire (28) sur le trajet principal (20).

4. Dispositif selon l'une quelconque des revendications précédentes, caractérisé en ce qu'il comprend en outre un dispositif mélangeur (12) disposé en aval des moyens d'injection (24) d'une part, et en amont du catalyseur (18) d'autre part.

5. Dispositif selon l'une quelconque des revendications précédentes, caractérisé en ce que les moyens de chauffage (16 ;50) sont aptes à élever la température des gaz de combustion jusqu'a une température d'au moins 300°C.

6. Dispositif selon l'une quelconque des revendications précédentes, caractérisé en ce qu'il comporte en outre un filtre à poussière (46) disposé en amont du catalyseur (18).

7. Dispositif selon l'une quelconque des revendications précédentes, caractérisé en ce qu'il comprend en outre un trajet de dérivation (26) branché en amont des moyens d'injection (24), d'une part, et en aval du catalyseur (18), d'autre part, et en ce que le trajet de dérivation (26) est muni d'une vanne de dérivation (30) activable en réponse à un signal d'alarme.

8. Dispositif selon la revendication 7, caractérisé en ce qu'il comprend en outre un détecteur (44) de la pression différentielle disposé de part et d'autre du catalyseur (18) pour commander les moyens de soufflage (14) et/ou la vanne de dérivation (30) en fonction de la valeur mesurée par le détecteur (44).

9. Dispositif selon l'une quelconque des revendications précédentes, caractérisé en ce qu'il comprend également un détecteur (42) destiné à fournir un signal représentatif de la présence et/ou de la température des gaz de combustion à la sortie de la chambre de combustion, un circuit de commande (10) connecté audit détecteur (42), auxdits moyens de soufflage (14), auxdits moyens de chauffage (16 ; 50) et/ou à ladite vanne activable (32) pour, en fonction dudit signal représentatif, commander sélectivement soit simultanément lesdits moyens de soufflage (14) et lesdits moyens de chauffage (16 ; 50) lorsque la température des gaz de combustion est inférieure à 300°C, soit uniquement lesdits moyens de soufflage (14) lorsque ladite température dépasse 300°C.

10. Dispositif selon l'une quelconque des revendications précédentes à l'exclusion des combinaisons avec les revendications 1 et 3, caractérisé en ce qu'il est disposé à l'intérieur d'un caisson (60) formant une unité d'épuration.

11. Dispositif selon la revendication 10, caractérisé en ce que le trajet d'écoulement (20) est constitué par un conduit ayant la configuration d'un U dont les deux branches (70, 72) abritent respectivement le catalyseur (18) et les moyens d'injection (24) de l'agent réducteur et dont l'âme (76) reliant les deux branches comprend les moyens de soufflage (14) et/ou le dispositif mélangeur (12).

12. Dispositif selon les revendications 10 ou 11, caractérisé en ce que le caisson (60) comprend des parois isolées thermiquement.

13. Dispositif selon l'une quelconque des revendications précédentes, caractérisé en ce que l'agent réducteur est de l'ammoniac.

## Claims

1. Apparatus for the reduction nitrogen oxides from combustion gases contained in at least one combustion chamber having an intermittent operation, said apparatus being located on a main flow path (20) of combustion gases between the combustion chamber (2) and a gas discharge path (6), said apparatus comprising, on said main flow path (20), means (24) for injecting a reduction agent and a catalyser (18) capable, in combination of the flow of combustion gas laiden with the reduction agent, of reducing the nitrogen oxides, characterized in that, on the main flow path (20), are provided gas blowing means (14) and, upstream from said catalyser (18), gas heating means (16), said blowing means (14) and said heating means (16) being associated with the secondary flow path (28) comprising a variable gate (32) connected in parallel with the main flow path (20) between a first point (38) located upstream from said injection means (24), but downstream from said blowing means (14) and said heating means (16), and a second point (40) located downstream from said gas discharge path (6), but upstream from said catalyser (18) and from said blowing means (14), and in that control means (10) control said injection means (24), said blowing means (14), said heating means (16) and said variable gate (32) so that, in the absence of an outflow of gas from the combustion chamber (2), a closed circuit gas flow between said first and said second points (38, 40) maintains an adequate heating of said catalyser (18).

2. Apparatus for the reduction of nitrogen oxides from combustion gases contained in combustion gases of at least one combustion chamber having an intermittent operation, said apparatus being located on a main flow path (20) of combustion gases between the combustion chamber (2) and a gas discharge path (6), said apparatus comprising means (24) for injecting a reduction agent in the main flow path (20) and a catalyser (18) capable, in combination with the combustion gas flow laiden with the reduction agent, of reducing the nitrogen oxides, characterized in that said apparatus comprises blowing means (14) of said combustion gases laided with said reduction agent, heating means (16; 50) to maintain said catalyser (18) at a substantially constant temperature corresponding to a sufficient catalysing temperature in spite of the intermittent operation of said combustion chamber, and in that said heating means are formed by a heat accumulator (50) comprising a sealed envelope (52) containing a heat conducting fluid and surrounding at least a substantial part of said catalyser (18), said envelope (52) including a heating resistance (56) in direct contact with said conducting fluid, said catalyser (18) being maintained at temperature either by combustion gases flowing through said catalyser or by secondary heating means associated with said heat accumulator.

3. Apparatus according to claim 1, characterized in that said blowing means (14) are located on the main path (20) between the branchings (38, 40) of said secondary path (28) on said main path (20).

4. Apparatus according to any one of the preceding claims, characterized in that it further comprises a mixing device (12) located downstream from said injection means (24) and upstream from said catalyser (18).

5. Apparatus according to any one of the preceding claims, characterized in that said heating means (16; 50) are adapted to raise the temperature of said combustion gases to a temperature of at least 300°C.

6. Apparatus according to any one of the preceding claims, characterized in that it further includes a particle filter (46) located upstream from said catalyser (18).

7. Apparatus according to any one of the preceding claims, characterized in that it further comprises a deviation path (26) connected upstream from said injection means (24), and also downstream from said catalyser (18), and in that said deviation path (26) is supplied with a deviation gate (30) able to be activated in response to an alarm signal.

8. Apparatus according to claim 7, characterized in that it further comprises a detector (44) of the differential pressor on both sides of said catalyser (18) to control said blowing means (14) and/or said deviation gate (30) as a function of the value measure of the detector (44).

9. Apparatus according to any one of the preceding claims, characterized in that it further comprises a detector (42) for supplying a signal representative of the presence and/or of the temperature of said combustion gases at the output of said combustion chamber, a control circuit (10) connected to said detector (42), to said blowing means (14), to said heating means (16; 50) and/or to said operable gate (32) to, as a function of said representative signal, selectively control either simultaneously said blowing means (14) and said heating means (16; 50) when the temperature of combustion gases is less than 300°C or only said blowing means (14) when said temperature exceeds 300°C.

10. Apparatus according to any one of the preceding claims except for combinations with claims 1 and 3, characterized in that it is located in the interior of the a well (60) forming a purification unit.

11. Apparatus according to claim 10, characterized in that the flow path (20) is constituted by a U-shaped conduit having two branches (70, 72) housing respectively said catalyser (18) and said reduction agent injection means (24) and whose bore (76), which connects said two branches, comprises said blowing means (14) and/or said mixing device (12).

12. Apparatus according to claims 10 or 11, characterized in that said well (60) comprises thermally insulated walls.

13. Apparatus according to any one of the preceding claims, characterized in that the reduction agent is ammonia.

## Patentansprüche

1. Anordnung für die Herabsetzung von Stickstoffoxidverbindungen, enthalten in Abgasen aus mindestens einer Verbrennungskammer mit intermittierendem Betrieb, welche Anordnung in der Hauptabgasbahn (20) des Abgases zwischen der Verbrennungskammer (2) und einem Gasauslaß (6) angeordnet ist, welche Anordnung in der Hauptabgasbahn (20) Injektionsmittel (24) eines reduzierenden Mittels und einen Katalysator (18) umfaßt, der in Verbindung mit dem Abgasstrom, beladen mit dem reduzierenden Mittel, die Stickstoffoxidverbindungen reduzieren kann, dadurch gekennzeichnet, daß in der Hauptabgasbahn (20) Gebläsemittel (14) für das Gas und stromauf bezüglich des Katalysators (18) Heizmittel (16) für das Gas vorgesehen sind, welche Gebläsemittel und Heizmittel (14, 16) einer Sekundärabgasbahn (28) zugeordnet sind, umfassend ein Einstellventil (32), welches der Hauptabgasbahn (20) zwischen einem ersten Punkt (38) stromab den Injektionsmitteln (24), jedoch stromauf den Gebläsemitteln (14) und Heizmitteln (16) und einem zweiten Punkt (40), stromauf dem Abgasauslaß (6), jedoch stromab bezüglich des Katalysators (18) und der Gebläsemittel (14) parallelgeschaltet ist und daß Steuermittel (10) die Injektionsmittel (24), die Gebläsemittel (14) und die Heizmittel (16) sowie das einstellbare Ventil (32) derart steuern, daß bei Fehlen von aus der Verbrennungskammer (2) stammendem Abgasdurchsatz eine Zirkulation in geschlossenem Kreislauf des Gases zwischen dem ersten und dem zweiten Punkt (38, 40) eine angemessene Aufheizung des Katalysators (18) aufrechterhält.

2. Anordnung für die Herabsetzung an Stickstoffoxidverbindungen, enthalten in Abgasen mindestens einer Verbrennungskammer mit intermittierender Betriebsweise, welche Anordnung in einer Hauptabgasbahn (20) des Verbrennungsgases zwischen der Verbrennungskammer (2) und einem Gasauslaß (6) angeordnet ist, welche Anordnung Injektionsmittel (24) eines reduzierenden Mittels in die Hauptabgasbahn (20) und einen Katalysator (18) umfaßt, der in Verbindung mit dem mit dem Reduktionsmittel beladenen Abgasstrom die Stickstoffoxidverbindungen herabzusetzen vermag, dadurch gekennzeichnet, daß die Anordnung Gebläsemittel (14) des reduktionsmittelbeladenen Abgases, Heizmittel (16, 50) für das Halten des Katalysators (18) bei einer im wesentlichen konstanten Temperatur entsprechend der angemessenen Katalysetemperatur trotz der intermittierenden Funktion der Verbrennungskammer umfaßt und daß die Heizmittel von einem Wärmeakkumulator (50) gebildet sind, umfassend eine abgedichtete Hülle (52), die ein wärmehaltendes Fluid enthält und mindestens eine wesentliche Partie des Katalysators (18) umgibt, welche Hülle (52) einen Heizwiderstand (56) in direktem Kontakt mit dem wärmehaltenden Fluid umfaßt, wobei der Katalysator (18) auf Temperatur gehalten wird, entweder durch das durch den Katalysator zirkulierende Abgas oder durch die Ergänzungsheizmittel, zugeordnet dem Wärmeakkumulator.

3. Anordnung nach Anspruch 1, dadurch gekennzeichnet, daß die Gebläsemittel (40) in der Hauptbahn (20) zwischen den Verzweigungen (38, 40) der Sekundärbahn (28) an der Hauptbahn (20) angeordnet sind.

4. Anordnung nach einem der vorangehenden Ansprüche, dadurch gekennzeichnet, daß sie ferner eine Mischvorrichtung (12) umfaßt, angeordnet stromab den Injektionsmitteln (24) einerseits und stromauf des Katalysators (18) andererseits.

5. Anordnung nach einem der vorangehenden Ansprüche, dadurch gekennzeichnet, daß die Heizmittel (16, 50) in der Lage sind, die Temperatur des Abgases bis zu einer Temperatur von mindestens 300°C anzuheben.

6. Anordnung nach einem der vorangehenden Ansprüche, dadurch gekennzeichnet, daß sie ferner ein Staubfilter (46), stromauf bezüglich des Katalysators (18) angeordnet, umfaßt.

7. Anordnung nach einem der vorangehenden Ansprüche, dadurch gekennzeichnet, daß sie ferner eine Umleitungsbahn (26) umfaßt, die stromauf den Injektionsmitteln (24) einerseits abzweigt und stromab bezüglich des Katalysators (18) andererseits und daß die Umleitungsbahn (26) mit einem Umleitungsventil (30) versehen ist, das in Reaktion auf ein Alarmsignal aktivierbar ist.

8. Anordnung nach Anspruch 7, dadurch gekennzeichnet, daß sie ferner einen Detektor (44) für die Druckdifferenz beidseits des Katalysators umfaßt zum Steuern der Gebläsemittel (14) und/oder des Umleitungsventils (30) in Abhängigkeit von dem durch den Detektor (44) gemessenen Wert.

9. Anordnung nach einem der vorangehenden Ansprüche, dadurch gekennzeichnet, daß sie außerdem einen Detektor (42) umfaßt, bestimmt zum Liefern eines Signals, das repräsentativ ist für das Vorhandensein und/oder die Temperatur des Abgases am Auslaß der Verbrennungskammer, eine Steuerschaltung (10), angeschlossen an den Detektor (42), an die Gebläsemittel (14), die Heizmittel (16, 50) und/oder das aktivierbare Ventil (32), um in Abhängigkeit von diesem repräsentativen Signal selektiv entweder gleichzeitig die Gebläsemittel (14) und die Heizmittel (16, 50) zu steuern, wenn die Temperatur des Verbrennungsgases unter 300°C liegt, oder ausschließlich die Gebläsemittel (14), wenn diese Temperatur 300°C übersteigt.

10. Anordnung nach einem der vorangehenden Ansprüche mit Ausnahme der Kombinationen mit den Ansprüchen 1 und 3, dadurch gekennzeichnet, daß sie im Inneren eines Gehäuses (60) untergebracht ist, das eine Reinigungseinheit bildet.

11. Anordnung nach Anspruch 10, dadurch gekennzeichnet, daß die Abgasbahn (20) von einer Leitung gebildet wird mit der Konfiguration eines U, dessen beide Schenkel (70, 72) den Katalysator (18) bzw. die Injektionsmittel (24) des reduzierenden Mittels aufnehmen und dessen Basis (76), welche die beiden Schenkel verbindet, die Gebläsemittel (14) und/oder die Mischvorrichtung (12) enthält.

12. Anordnung nach Ansprüchen 10 oder 11, dadurch gekennzeichnet, daß das Gehäuse (60) thermisch isolierte Wandungen umfaßt.

13. Anordnung nach einem der vorangehenden Anprüche, dadurch gekennzeichnet, daß das reduzierende Mittel Ammoniak ist.
